(19) Europäisches Patentamt
European Patent Office
Office européen des brevets

(11) **EP 3 985 052 A1**

(12) **EUROPÄISCHE PATENTANMELDUNG**

(43) Veröffentlichungstag:
20.04.2022  Patentblatt 2022/16

(21) Anmeldenummer: 21202383.2

(22) Anmeldetag: **13.10.2021**

(51) Internationale Patentklassifikation (IPC):
**C08J 7/04** (2020.01)   **C08J 7/054** (2020.01)
**C08J 7/056** (2020.01)   **B32B 27/08** (2006.01)
**B32B 37/06** (2006.01)

(52) Gemeinsame Patentklassifikation (CPC):
**C08J 7/0427; B32B 7/023; B32B 27/08;**
**B32B 27/36; B32B 37/06; C08J 7/054; C08J 7/056;**
B32B 2255/10; B32B 2255/26; B32B 2307/412;
B32B 2307/71; B32B 2410/00; C08J 2300/12;
C08J 2367/02; C08J 2400/14;          (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **16.10.2020   DE 102020213101**

(71) Anmelder: **Mitsubishi Polyester Film GmbH**
**65203 Wiesbaden (DE)**

(72) Erfinder:
• **ÜNAL, Alper**
**55116 Mainz (DE)**
• **LOHRE, Claudia**
**65195 Wiesbaden (DE)**
• **KOLAR, Petr**
**65760 Eschborn (DE)**
• **HERBST, Thiemo**
**55116 Mainz (DE)**

(74) Vertreter: **Schweitzer, Klaus**
**Plate Schweitzer Zounek**
**Patentanwälte**
**Rheingaustrasse 196**
**65203 Wiesbaden (DE)**

(54) **EIN- ODER MEHRSCHICHTIGE POLYESTERFOLIE MIT EINER PERMANENTEN ANTIFOG-BESCHICHTUNG UND EINER TRANSPARENZ VON MINDESTENS 92%**

(57)    Die vorliegende Erfindung betrifft eine ein- oder mehrschichtige beschichtete Polyesterfolie mit einer Transparenz von mindestens 92%, wobei die Polyesterfolie eine erste und eine zweite Oberfläche aufweist, wobei auf mindestens einer der Oberflächen der Polyesterfolie eine permanente Antifog-Beschichtung aufgebracht ist, und wobei die Antifog-Beschichtung mindestens ein wasserlösliches Polymer, ein anorganisches, hydrophiles Material und einen Vernetzer umfasst, wobei das wasserlösliche Polymer ein Polyvinylalkohol oder ein hydrophiles PolyvinylalkoholCopolymer ist. Weiterhin betrifft die vorliegende Erfindung Herstellungsverfahren der beschichteten Polyesterfolie sowie deren Verwendung zur Herstellung von Energiesparmatten in Gewächshäusern.

EP 3 985 052 A1

(52) Gemeinsame Patentklassifikation (CPC): (Forts.)
C08J 2429/04

**Beschreibung**

**Gebiet der Erfindung**

Die Erfindung betrifft eine ein- oder mehrschichtige, hochtransparente, biaxial orientierte, UV-stabile Polyesterfolie, welche mindestens einseitig mit einer permanenten Antifog-Beschichtung ausgestattet ist. Die erfindungsgemäße Folie eignet sich zur Herstellung von Gewächshausschattenmatten und weist spezielle Transparenzeigenschaften, permanente Antifog-Eigenschaften und eine hohe UV-Stabilität auf. Die Erfindung betrifft ferner ein Verfahren zur Herstellung der erfindungsgemäßen Polyesterfolie sowie ihre Verwendung in Gewächshäusern.

**Hintergrund**

Folien für Gewächshausschattenmatten in Gewächshäusern müssen eine Reihe von Anforderungen erfüllen. Im photosynthetischen Wellenlängenbereich muss eine hohe Lichtdurchlässigkeit gegeben sein, da dieser von den Pflanzen für ein optimales Pflanzenwachstum benötigt wird. Die Lichtdurchlässigkeit soll bei Witterungsbedingungen, bei denen sich Kondenswasser an den Schattenmatten bildet, nach Möglichkeit nicht beeinträchtigt werden.

Der Begriff Antifog (Anti-Beschlag) wird verwendet, um Wassertropfen auf der Oberfläche von transparenten Kunststofffolien zu beschreiben. Aufgrund der typischerweise hohen Luftfeuchtigkeit in Gewächshäusern entsteht bei entsprechenden Witterungsbedingungen (z.B. Temperaturdifferenzen zwischen Tag und Nacht) Kondenswasser in Form von Wassertropfen, insbesondere auf der Oberfläche der pflanzenzugewandten Seite von Gewächshausschattenmatten. Neben den Witterungsbedingungen begünstigt die unterschiedliche Oberflächenspannung von Wasser und Kunststoff die Kondenswasserbildung. Folien mit Antifog-Eigenschaften verhindern die Wassertropfenbildung und ermöglichen eine beschlagfreie Sicht durch die Kunststofffolie.

Im Allgemeinen können Antifog-Additive während des Extrusionsprozesses in die Polymermatrix eingearbeitet oder als Beschichtung auf die Polymermatrix aufgetragen werden. Derartige Antifog-Additive sind allgemein bivalente Verbindungen, die einen unpolaren aliphatischen Bereich zur Verankerung in der Polymermatrix und einen polaren hydrophilen Bereich haben, der mit Wasser wechselwirken kann und die Oberflächenspannung der Wassertropfen so herabsetzt, dass sich ein kontinuierlicher transparenter Wasserfilm (aufgrund einer hydrophilen Oberfläche) auf der Folienoberfläche ausbildet. Durch den Einsatz von Antifog-Additiven sollte die Lichtdurchlässigkeit und somit die Transparenz der Gewächshausfolien nicht negativ beeinflusst werden, um den Ernteertrag nicht zu vermindern. Die Wassertropfen wirken im Gegensatz zu einem Flüssigkeitsfilm stark lichtstreuend und verstärkt reflektierend, die insbesondere in den lichtarmen Morgenstunden zu einer deutlich geringeren Photosynthese führen. Des Weiteren wird die Fäulnisbildung von Pflanzen, Pflanzenteilen durch nicht haftende bzw. heruntertropfende Wassertropfen vermieden und Verbrennungserscheinungen von Pflanzen, Pflanzenteilen durch Tropfen die auf der Folienoberfläche bei Lichteinfall wie eine Brennlinse fungieren, reduziert. Für den Fall, dass es bei sehr starker Kondenswasserbildung dennoch zu einer Tröpfchenbildung kommt, darf die Antifog-Komponente keine giftigen bzw. besonders umweltschädigenden Substanzen enthalten. Unter den unerwünschten Substanzen sind insbesondere Alkylphenolethoxylate zu nennen, die in Antifog-Systemen häufig zum Einsatz kommen (z.B. WO 1995018210).

Weiterhin wäre es wünschenswert, wenn die Gewächshausfolie eine UV-Stabilität aufweist, die es ermöglicht die Schattenmatte mindestens 5 Jahre in einem Gewächshaus im Einsatz zu lassen, ohne dabei signifikant zu vergilben, Versprödungen oder Rissbildungen an der Oberfläche zu zeigen und in den mechanischen Eigenschaften gravierend nachzulassen oder deutlich an Transparenz zu verlieren.

**Stand der Technik**

Polyesterfolien mit verschiedenen transparenten Antifog-Beschichtungen sind bekannt. So werden z.B. grenzflächenaktive Beschichtungen basierend auf hydrophilen wasserlöslichen Polymeren und/oder Tenside zur Beschichtung der Oberflächen von Kunststofffolien eingesetzt, um einen Antifog-Effekt zu erzielen.

Ein grundlegendes Problem wasserlöslicher Polymere und oder Tenside stellt die leichte Abwaschbarkeit der Beschichtung dar, wodurch eine permanente Antifog-Wirkung nicht realisiert werden kann. Gängige Polyesterfolien mit einer Antifog-Beschichtung werden in EP 1647568 B1 und EP 1777251 B1 beschrieben. Diese Polyesterfolien haben gute mechanische Eigenschaften, zeigen jedoch eine niedrigere Transparenz. Des Weiteren weisen sie eine geringere Langzeitstabilität unter Bewitterung auf. Außerdem hat die Antifog-Wirkung dieser Polyesterfolien nur eine geringe Lebensdauer von einigen Monaten, da sich die entsprechenden Antifog-Additive leicht abwaschen lassen und im Wasser löslich sind, so dass die Wirksubstanz beim Einsatz als Gewächshausschattenmatte schnell verbraucht wird. EP 1152027 A1, EP 1534776 A1 und EP 2216362 A1 beschreiben Polyolefinfolien basierend auf LDPE, oder auch Folien auf PVC- und EVA-Basis mit langanhaltenden Antifog-Eigenschaften für Lebensmittelverpackungen und Anwendungen für Gewächshausanwendungen unter Verwendung von Antifog-Additiven basierend auf anorganischen hydrophilen kolloidalen Substanzen (kolloidalem Silizium, Aluminium und weiteren) und nichtionischen, anionischen oder kationischen oberflächenaktiven Additiven. Diese zeigen zwar permanente Antifog-Eigenschaften, weisen jedoch im Gegensatz zu Polyesterbasierten Gewächshausschattenmatten stark verminderte mechanische Eigenschaften auf. Der Einsatz von Polyolefinbasierten Folien kann für die Zielanwendung kategorisch ausgeschlossen werden, da die gewünschte Langzeitstabilität und in Folge die Langzeitlebensdauer von 5 Jahren aufgrund der schnelleren UV-Degradierung von Polyethylen (PE) im Vergleich zu Polyethylenterephthalat (PET) nicht realisiert werden kann, wodurch deren Wirtschaftlichkeit negativ beeinflusst wird. Außerdem führt die geringere mechanische Stabilität der Polyolefine dazu, dass die Schattenmatten sich verdehnen und ihre weitestgehend geschlossene Struktur verlieren, was zu einer geringeren Isolationswirkung führt.

EP3456762A2 offenbart eine Polyesterfolie mit permanenter Antifog Beschichtung auf Basis von porösem Material, einem organischem Vernetzer auf Polymerbasis, organofunktionellem Silan und einem oder mehreren Tensiden, die zur Weiterverarbeitung als Schattenmatte geeignet ist. Die Antifog Eigenschaften dieser Folien hinsichtlich Permanenz sind gut, und die erzielbare Transparenz liegt im angestrebten Bereich. Dennoch zeigen diese Folien Verbesserungsbedarf in der Qualität der Antifogwirkung, speziell bei höheren Beschichtungsdicken. Weiterhin ist die Verwendung von organofunktionellen Silanen ist aus regulatorischen Gründen problematisch und unerwünscht, so dass diese Lösung ebenfalls ausgeschlossen werden muss.

**Aufgabe**

Die Folien gemäß dem Stand der Technik sind nachteilig, weil die Antifog-Eigenschaften nicht langanhaltend sind, oder die Antifog-Beschichtung in einem zusätzlichen Prozessschritt auf die Folien aufgebracht wird. Des Weiteren sind die Polyesterfolien gemäß dem Stand der Technik nachteilig, weil sie über keine ausreichende permanente Antifog-Beschichtung in Verbindung mit einer hohen Transparenz und Langzeitstabilität verfügen.

Aufgabe der vorliegenden Erfindung war es eine Polyesterfolie herzustellen, die permanente Antifog-Eigenschaften bei gleichzeitig hoher Transparenz von mindestens 92% aufweist und eine UV-Stabilität von mindestens 5 Jahren hat, ohne dabei signifikant zu vergilben und eine Versprödung oder Rissbildung der Oberfläche sowie eine Verschlechterung der für die Anwendung kritischen mechanischen und optischen Eigenschaften zu zeigen. Die Folie soll sich im Dickenbereich von 10 bis 40 $\mu$m zudem wirtschaftlich auf existierenden Polyesterfolienanlagen, Ein- oder Mehrschichtanlagen herstellen lassen.

**Lösung der Aufgabe**

Gelöst wird die Aufgabe durch die Bereitstellung einer ein- oder mehrschichtigen beschichteten Polyesterfolie mit einer Transparenz von mindestens 92% , wobei die Polyesterfolie eine erste und eine zweite Oberfläche aufweist, wobei auf mindestens einer der Oberflächen der Polyesterfolie eine permanente Antifog-Beschichtung aufgebracht ist, und wobei die Antifog-Beschichtung mindestens ein wasserlösliches Polymer, ein anorganisches, hydrophiles Material und einen Vernetzer umfasst, wobei das wasserlösliche Polymer ein Polyvinylalkohol (PVOH) oder ein hydrophiles Polyvinylalkohol-Copolymer ist.

**Detailbeschreibung**

Die erfindungsgemäße Polyesterfolie umfassend eine Basisschicht (B) mit einer ersten und einer zweiten Oberfläche. Die erfindungsgemäße Polyesterfolie kann zusätzlich eine Deckschicht (A) umfassen, die auf der ersten oder der zweiten Oberfläche der Polyesterfolie aufgebacht ist. Weiterhin kann die erfindungsgemäße Polyesterfolie zusätzlich eine weitere Deckschicht (C) umfassen, wobei die Deckschicht (C) auf der der Deckschicht (A) gegenüberliegenden Oberfläche der Polyesterfolie aufgebracht ist.

Die erfindungsgemäße Polyesterfolie besteht aus Polyester, Additiven und mindestens einer Beschichtung.

Die Basisschicht (B) enthält bevorzugt mindestens 70 Gew.-% thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure [= Poly(1,4-cyclohexan-dimethylenterephthalat), PCDT] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6- dicarbonsäure-Einheiten bestehen. In einer besonders bevorzugten Ausführungsform besteht die Schicht aus Polyethylenterephthalat-Homopolymer.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Geeignete andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C3-C19) Alkandisäuren besonders geeignet, wobei der Alkanteil geradkettig oder verzweigt sein kann. Von heterocyclischen Dicarbonsäuren ist insbesondere 2,5-Furandicarbonsäure zu nennen.

Eine Schicht im Sinne der vorliegenden Erfindung ist eine Polymerschicht, die mittels Coextrusion gebildet wird. Das heißt, die Polyesterfolie gemäß der vorliegenden Erfindung wird durch eine oder mehrere Schicht(en) gebildet.

Eine Beschichtung im Sine der vorliegenden Erfindung ist das Trocknungsprodukt einer auf die Polyesterfolie aufgebrachten wässrigen Dispersion und nicht Teil des Extrussionsprozesses der Polyesterfolie an sich.

Die gegebenenfalls vorhandene(n) zusätzlichen Deckschichten (A) und (C) der Folie bestehen bevorzugt ebenfalls aus einem Polyester, wie er oben beschrieben wurde, wobei die Zusammensetzung gleich oder verschieden ist von der oben beschriebenen Basisschicht.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Folie gemäß der Erfindung enthält Partikel, um eine gewisse Rauheit der Oberfläche zu erreichen und die Folie gut wickeln zu können.

Verwendbare Partikel sind beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Titandioxid, Kaolin oder partikelförmige Polymere wie z. B. vernetzte Polystyrol- oder Arcrylat-Partikel. Bevorzugt wird amorphe Kieselsäure als Partikel verwendet. Die Partikel werden bevorzugt in einer Konzentration von kleiner 0,5 Gew.-% bezogen auf das Gesamtgewicht der Folie eingesetzt. Weitere Partikel, die die Oberflächen- und rheologischen Eigenschaften der Folie beeinflussen sind in der erfindungsgemäßen Folie bevorzugt nicht vorhanden.

Ist die Folie mehrschichtig aufgebaut, können die Partikel in allen Schichten, bevorzugt in den Deckschichten enthalten sein.

Ein Vorteil der vorliegenden Erfindung ist, dass die erfindungsgemäße Antifog-Beschichtung frei von haftvermittelnden organofunktionellen Silanen ist. Haftvermittelnde organofunktionelle Silane sind beispielsweise Vinyltrimethoxysilan, Vinyltriethoxysilan, γ-Meth-Acryloxy-propyl-trimethoxysilan, oder γ-Glycidoxypropyltrimethoxysilan. Solche Silane stehen im Verdacht eine cancerogene Wirkung zu besitzen und sollten daher vermieden werden.

Die Folie muss zudem eine geringe Transmission im Wellenlängenbereich von unterhalb 370 nm bis 300 nm aufweisen. Diese liegt bei jeder Wellenlänge im angegebenen Bereich bei kleiner 40 % bevorzugt bei kleiner 30 % und besonders bevorzugt bei kleiner 15 % (Verfahren s. Messmethoden). Hierdurch wird die Folie vor Versprödung und Vergilbung geschützt, zudem werden hierdurch die Pflanzen und Installationen im Gewächshaus vor dem UV-Licht geschützt. Zwischen 390 und 400 nm liegt die Transparenz bei größer 20 %, bevorzugt bei größer 30 % und besonders bevorzugt bei größer 40 %, da dieser Wellenlängenbereich bereits deutlich Photosynthese-aktiv ist und das Pflanzenwachstum bei zu starker Filterung in diesem Wellenlängenbereich negativ beeinflusst würde. Die geringe UV Durchlässigkeit wird durch den Zusatz von organischem UV-Stabilisator erzielt. Eine geringe Durchlässigkeit für UV-Licht schützt den gegebenenfalls ebenfalls vorhandenen Flammstabilisator vor schneller Zerstörung und starker Vergilbung. Der organische UV-Stabilisator wird dabei aus der Gruppe der Triazine, Benzotriazole oder Benzoxazinone ausgewählt. Besonders bevorzugt sind dabei Triazine, u.a., weil sie bei den für PET üblichen Verarbeitungstemperaturen von 275 - 310 °C eine gute thermische Stabilität und eine geringe Ausgasung aus der Folie aufweisen. Insbesondere geeignet ist 2-(4,6-Diphenyl-1,3,5-triazin-2-yl)-5-(hexyl)oxy-phenol (z.B. Tinuvin® 1577, BASF) oder 2-(2'-hydroxyphenyl)-4,6- bis(4-phenylphenyl) Triazin, (z.B. Tinuvin™ 1600, BASF) vertrieben werden. Werden diese eingesetzt, können die bevorzugten niedrigen Transparenzwerte unterhalb von 370 nm schon bei geringeren Stabilisator-Konzentrationen erreicht werden, wobei gleichzeitig eine höhere Transparenz bei Wellenlängen oberhalb von 390 nm erreicht wird.

Die Folie, bzw. im Fall einer Mehrschichtfolie alle Folienschichten enthalten mindestens einen organischen UV-Stabilisator. UV-Stabilisatoren werden der/den Deckschicht/en bzw. der Monofolie in einer bevorzugten Ausführungsform in Mengen zwischen 0,3 und 3 Gew.-%, bezogen auf das Gewicht der jeweiligen Schicht, zugegeben. Besonders bevorzugt ist ein UV-Stabilisatorgehalt zwischen 0,75 und 2,8 Gew.-%. Idealerweise enthalten die Deckschichten zwischen 1,2 und 2,5 Gew.-% UV-Stabilisator. In der mehrschichtigen Ausführungsform der Folie enthält, neben den Deckschichten, bevorzugt auch die Basisschicht einen UV-Stabilisator, wobei der Gehalt an UV-Stabilisator in Gew.-% in dieser Basisschicht bevorzugt niedriger ist, als in der/den Deckschicht/en. Diese angegebenen Gehalte in der/den Deckschicht/en beziehen sich auf Triazinderivate. Wird statt eines Triazinderivats komplett oder teilweise ein UV-Stabilisator aus der Gruppe der Benzotriazole oder Benzoxazinone eingesetzt, so muss der ersetzte Anteil der Triazin-Komponente durch die 1,5-fache Menge einer Benzotriazol- oder Benzoxazinon-Komponente substituiert werden.

Die Polyesterfolie kann weitere Stabilisatoren, beispielsweise Phosphorverbindungen, wie Phosphorsäure und ihre Derivate wie z.B. Phosphorsäureester oder Phosphonsäure und ihre Derivate wie z.B. Phosphonsäureester enthalten, so dass die Folie eine reduzierte Entflammbarkeit aufweist.

Die Gesamtdicke der erfindungsgemäßen Polyesterfolie kann innerhalb bestimmter Grenzen variieren. Sie beträgt 10 bis 40 $\mu$m, vorzugsweise 14 bis 23 $\mu$m, besonders bevorzugt 14,5 bis 20 $\mu$m, wobei die Schicht B (=Basisschicht) der mehrschichtigen Variante einen Anteil von vorzugsweise 60 bis 90 % an der Gesamtdicke hat. Der Anteil der Basisschicht der dreischichtigen Ausführungsform an der Gesamtfoliendicke beträgt bevorzugt mindestens 60 %, besonders bevorzugt mindestens 70 % und ganz besonders bevorzugt mindestens 75 %.

In einer Ausführungsform ist die Folie dreischichtig aufgebaut und weist auf der einen Seite der Schicht (B) (=Basisschicht) eine Deckschicht (A) und auf der anderen Seite der Schicht (B) eine weitere Deckschicht (C) auf. In diesem Fall bilden die beiden Schichten (A) und (C) die Deckschichten (A) und (C). Die Antifog-Beschichtung kann dabei auf die Deckschicht (A) und/oder Deckschicht (C) aufgebracht werden. Durch einen dreischichtigen Aufbau kann eine Folie mit einer guten Transparenz erhalten werden, in dem die Schicht (B) keine weiteren Partikel außer denen, die durch Zugabe des Eigenregenrats eingebracht werden, enthält. Auf diese Weise kann der Anteil an rückgeführtem Regenerat erhöht werden, was zu einer besonders wirtschaftlichen Folienproduktion führt. Als Eigenregenerat werden Folienreste/-abfälle bezeichnet, die während des Folienherstellungsprozesses anfallen (z.B. Saumstreifen), diese können entweder während der Produktion direkt zurückgeführt werden oder zunächst gesammelt und anschließend bei der Herstellung der Schicht (B) zugesetzt werden.

Dabei soll der Anteil des zurückgeführten, recycelten Polyestermaterials so groß wie möglich sein, ohne die beschriebenen, erfindungsgemäßen Folieneigenschaften zu beeinträchtigen. In der erfindungsgemäßen Folie kann der Anteil an recyceltem Polyestermaterial in der Basisschicht (B) 0-60 Gew.-%, bevorzugt 0-50 Gew.-% und besonders bevorzugt 0-40 Gew.-% bezogen auf das Gesamtgewicht der Folie betragen.

Neben Eigenregenerat können auch solche Polyesterrohstoffe verwendet werden, die einen Recycling Prozess durchlaufen haben. Da recycelte Polyesterrohstoffe aus einer Vielzahl an Quellen, mit unterschiedlichen Rohstoffqualitäten, stammen können, ist es wichtig nur solche Quellen zuzulassen, die ein Mindestmaß an Sortenreinheit ermöglichen. In dem Zusammenhang zeigte sich, dass sich mit sog. PCR-Material überraschend gut Folien herstellen lassen, die als Basis der erfindungsgemäßen Folie geeignet sind. Die Transparenz der Folie erfährt dann eine leichte Abnahme, während die Trübung aufgrund der geringen möglichen Verunreinigungen leicht ansteigen kann. Überraschend ist die Tatsache, dass die Einbuße an Transparenz, die wie weiter unten beschrieben eine kritische Größe der erfindungsgemäßen Folie ist, geringer als erwartet ausfällt, und vermutlich auf einen nivellierenden Seiteneffekt der permanenten Antifog Beschichtung zurück zu führen ist. Unter PCR-Material (Post-Consumer-Reclaim Material) werden Rohstoffe verstanden, die durch Recycling aus alten Produkten gewonnen werden, die bereits von einem Kunden verwendet wurden.

Die erfindungsgemäße Folie weist eine Transparenz von mindestens 92 % auf, bevorzugt liegt die Transparenz bei 93 %, besonders bevorzugt bei 94 % und idealerweise bei mindestens 94,5 %. Je höher die Transparenz, desto besser wird das Pflanzenwachstum im Gewächshaus unterstützt.

Erreicht wird die erfindungsgemäße Transparenz durch die auf mindestens einer Seite befindlichen permanenten Antifog-Beschichtung.

## Beschichtung und Deckschicht-Modifikationen

In einer Ausführungsform ist die Polyesterfolie einseitig mit einer Antifog-Beschichtung ausgestattet. Dabei muss die unten beschriebene Antifog-Beschichtung einen geringeren Brechungsindex als die Polyesterfolie aufweisen. Der Brechungsindex der Antifog-Beschichtung bei einer Wellenlänge von 589 nm in Maschinenrichtung der Folie liegt dabei unterhalb von 1,64, bevorzugt unterhalb von 1,60 und idealerweise unterhalb von 1,58. Weiterhin muss die Trockenschichtdicke der Antifog-Beschichtung mindestens 60 nm bevorzugt mindestens 70 nm und insbesondere mindestens 80 nm betragen und maximal 150 nm, bevorzugt maximal 130 nm und idealerweise maximal 120 nm. Hierdurch wird eine ideale Transparenzerhöhung im gewünschten Wellenlängenbereich erreicht. Unterhalb einer Schichtdicke von 60 nm trägt die Antifog-Beschichtung nicht mehr ausreichend zur Transparenzerhöhung bei. Wird die erfindungsgemäße Trockenschichtdicke von max. 150 nm überschritten, so führt der Mehrantrag zu keiner weiteren Transparenzerhöhung. Weiterhin wird aufgrund des höheren Beschichtungsverbrauchs die Wirtschaftlichkeit der Folie herabgesetzt.

In einer weiteren Ausführungsform weist die Antifog-Beschichtung eine Trockenschichtdicke von mindestens 30 nm und bevorzugt mindestens 40 nm und besonders bevorzugt mindestens 50 nm auf und liegt maximal bei < 60 nm. Dadurch wird die erfindungsgemäße permanente Antifog-Wirkung erreicht. Um die erfindungsgemäßen Transparenzwerte von mindestens 92% zu erzielen, muss diese Ausführungsform auf der der Antifog-Beschichtung gegenüberliegenden Oberfläche der Polyesterfolie eine Antireflex-Modifikation aufweisen. Diese kann entweder durch eine Antireflex-Beschichtung, oder eine Deckschichtmodifikation mit niedrigerem Brechungsindex als Polyethylenterephthalat gebildet werden.

Wird die Antireflex-Modifikation durch eine Antireflex-Beschichtung dargestellt, so weist diese Beschichtung einen geringeren Brechungsindex als die Polyesterfolie auf. Der Brechungsindex der Antireflex-Beschichtung bei einer Wellenlänge von 589 nm in Maschinenrichtung der Folie liegt dabei unterhalb von 1,64, bevorzugt unterhalb von 1,60 und idealerweise unterhalb von 1,58. Besonders geeignet sind Polyacrylate, Silikone und Polyurethane, sowie Polyvinylacetat. Geeignete Acrylate sind beispielsweise in der EP-A-0 144 948 beschrieben und geeignete Silikone beispielsweise in der EP-A-0 769 540. Besonders bevorzugt sind Beschichtungen auf Polyacrylat- und auf Polyurethanbasis, da diese im Gewächshaus nicht zum Ausschwitzen von Beschichtungskomponenten bzw. Abblättern von Teilen der Beschichtung neigen, was bei Beschichtungen auf Silikonbasis weit eher der Fall ist.

Bevorzugt enthält die Antireflexbeschichtung weniger als 10 Gew.-%, besonders bevorzugt weniger als 5 Gew.-% und ganz besonders bevorzugt weniger als 1 Gew.-% Wiederholungseinheiten, die ein aromatisches Strukturelement enthalten. Oberhalb von 10 Gew.-% Anteil an Wiederholungseinheiten mit aromatischem Strukturelement kommt es zu einer deutlichen Verschlechterung der Bewitterungsstabilität der Beschichtung. Besonders bevorzugt enthält die Antireflex-Beschichtung, mindestens 1 Gew.-% (bezogen auf das Trockengewicht) eines UV-Stabilisators, besonders bevorzugt ist dabei Tinuvin 479, oder Tinuvin 5333-DW. Weniger bevorzugt sind HALS (hindered amine light stabilizers), da diese bei der Regenerierung (Rückführung von Folienresten aus der Produktion) zu einer deutlichen Gelbfärbung des Materials und damit zur Transparenzreduktion führen.

Die Dicke der Antireflex-Beschichtung beträgt mindestens 60 nm bevorzugt mindestens 70 nm und insbesondere mindestens 80 nm und beträgt maximal 130 nm, bevorzugt maximal 115 nm und idealerweise maximal 110 nm. Hierdurch wird eine ideale Transparenzerhöhung im gewünschten Wellenlängenbereich erreicht. In einer bevorzugten Ausführungsform liegt die Dicke der Antireflex-Beschichtung bei mehr als 87 nm, und besonders bevorzugt bei mehr als 95 nm. In dieser bevorzugten Ausführungsform liegt die Dicke der Beschichtung bevorzugt bei kleiner 115 nm und idealerweise unter 110 nm. In diesem engen Dickenbereich, ist sowohl die Transparenzerhöhung in der Nähe des Optimums und gleichzeitig ist in diesem Bereich die Reflektion des UV- und Blaubereichs des Lichts gegenüber dem Rest des sichtbaren Spektrums erhöht. Dies spart einerseits UV-Stabilisator, führt aber vor allem dazu, dass sich das Blau/Rot-Verhältnis zugunsten des Rot-Anteils verschiebt. Hierdurch werden ein verbessertes Pflanzenwachstum und ein vermehrter Blüten- und Fruchtansatz erreicht.

Wird die Antireflex-Modifikation durch eine Deckschichtmodifikation gebildet, so wird die Deckschichtmodifikation durch Co-Extrusion auf der Basisschicht B gebildet und befindet sich auf der der Antifog-Beschichtung gegenüberliegenden Folienseite. Dabei muss diese Schicht aus einem Polyester bestehen, der einen geringeren Brechungsindex als der Polyester der Basisschicht B aufweist. Der Brechungsindex bei einer Wellenlänge von 589 nm in Maschinenrichtung der durch Co-Extrusion aufgebrachten Deckschicht liegt unterhalb von 1,70, bevorzugt unterhalb von 1,65 und besonders bevorzugt unterhalb von 1,60. Dieser Brechungsindex wird dadurch erreicht, dass das Polymer einen Co-Monomeranteil von mindestens 2 Mol-%, bevorzugt mindestens 3 Mol-% und idealerweise mindestens 6 Mol-% enthält. Unterhalb von 2 Mol-% können die erfindungsgemäßen Werte für den Brechungsindex nicht erreicht werden. Der Co-Monomeranteil liegt unterhalb von 20 Mol-%, besonders bevorzugt unterhalb von 18 Mol-% und besonders bevorzugt unterhalb von 16 Mol-%. Oberhalb von 16 Mol-% wird die UV-Stabilität aufgrund der amorphen Natur der Schicht deutlich schlechter und oberhalb von 20 Mol-% kann auch mit einem weiteren Zusatz an UV-Stabilisator nicht mehr das gleiche Niveau an UV-Stabilität erreicht werden, wie unterhalb von 16 Mol-%. Als Co-Monomere gelten alle Monomere außer Ethylenglycol und Terephthalsäure (bzw. Dimethylterephthalat). Bevorzugt werden nicht mehr als 2 Co-Monomere gleichzeitig verwendet. Besonders bevorzugt als Co-Monomer ist Isophthalsäure. Eine Schicht mit einem Co-Monomer-Gehalt größer 8 Mol-% (bezogen auf den Polyester in dieser Schicht, bzw. auf dessen Dicarbonsäurekomponente) enthält zudem bevorzugt mindestens 1,5 Gew.-% und besonders bevorzugt mehr als 2,1 Gew.-% organischen UV-Stabilisator, bezogen auf das Gesamtgewicht der Schicht, um die schlechtere UV-Stabilität von Schichten mit erhöhtem Co-Monomer-Gehalt zu kompensieren.

In einer weiteren besonders bevorzugten Ausführungsform weisen beide Oberflächen der Polyesterfolie eine Antifog-Beschichtung mit einer Dicke von mindestens 60 nm bevorzugt mindestens 70 nm und insbesondere mindestens 80 nm und maximal 150 nm, bevorzugt maximal 130 nm und idealerweise maximal 120 nm auf. Dabei liegt der Brechungsindex der Antifog-Beschichtung bei einer Wellenlänge von 589 nm in Maschinenrichtung der Folie unterhalb von 1,64, bevorzugt unterhalb von 1,60 und idealerweise unterhalb von 1,58. Durch die beidseitige Antifog-Beschichtung können die bevorzugten Transparenzwerte von mindestens 94.5 % erzielt werden. Aufgrund der Verwendung einer einzelnen Beschichtungszusammensetzung können auf diese Weise, hochtransparente Folien mit sehr guten permanenten Antifog-Eigenschaften (Cold-Fog und Hot-Fog-Test) besonders wirtschaftlich hergestellt werden. Diese Folie ist besonders in Gewächshäusern mit einer kontinuierlich hohen Luftfeuchtigkeit (Kondensation) geeignet, da durch die beidseitige Antifog-Beschichtung die Bildung von Wassertropfen auf beiden Seiten der Folienoberfläche vermieden werden kann und die damit verbundene auftretende Lichtstreuung effizient vermieden werden kann.

Um die erfindungsgemäße permanente Antibeschlag-Wirkung zu erzielen, muss die Polyesterfolie mindestens einseitig mit einer permanenten Antifog-Beschichtung ausgestattet sein. Die permanenten Antibeschlag-Eigenschaften der Oberfläche werden erzielt, wenn die Bildung feiner Wassertröpfchen (z.B. Kondensation im Gewächshaus) auf der Oberfläche der Polyesterfolie nicht beobachtet wird und gleichzeitig die Abwaschbeständigkeit der Beschichtung gut ist. Eine Mindestvoraussetzung für gute Antibeschlag-Eigenschaften ist eine hohe Oberflächenenergie, bzw. ein niedriger Kontaktwinkel $\alpha$ (s. Methodenteil). Die Antibeschlag-Eigenschaften sind ausreichendend gut, wenn die Oberflächenspannung der Antibeschlagoberfläche mindestens 45 mN/m, bevorzugt mindestens 55 mN/m und besonders bevorzugt mindestens 60 mN/m beträgt. Ein permanenter Antifog-Effekt kann für eine Dauer von mindestens einem Jahr im Cold-Fog-Test und für mindestens drei Monate im Hot-Fog-Test erreicht werden (gewünschte Ratings A und B; s. Methodenteil, bzw. Beispieltabelle). Durch die Verwendung der unten beschriebenen Beschichtungszusammensetzung werden die erfindungsgemäßen permanenten Antibeschlag-Eigenschaften und eine Transparenz von mindestens 92 % erreicht. Die Antifog-Beschichtung wird durch Trocknung einer Beschichtungszusammensetzung gebildet. Bei einer mehrschichtigen Ausführungsform mit einer Antireflex-modifizierten Coex-Schicht wird die permanente Antifog-Beschichtung der Antireflex-modifizierten Coex-Schicht gegenüberliegenden Oberfläche der Polyesterfolie aufgebracht.

Die erfindungsgemäße Antifog-Beschichtungszusammensetzung ist eine wässrige Lösung umfassend a) ein Polyvinylalkohol, oder ein hydrophiles PVOH-Copolymer, b) ein anorganisches, hydrophiles Material, c) einen Vernetzer.

Übliche Antifog-Beschichtungen enthalten Tenside, um permanente Antibeschlag-Eigenschaften zu erreichen. Die Verwendung von Tensiden ist jedoch insbesondere bei der Herstellung mittels Inline-Verfahren nachteilig. Es wurde überraschend gefunden, dass die Verwendung von Polyvinylalkoholen oder hydrophilen PVOH-Copolymeren in der Antifog-Beschichtung zu guten permanenten Antibeschlag-Eigenschaften führt und auf die Verwendung von Tensiden in dieser Antifog-Beschichtung verzichtet werden kann.

Die Komponente a) ist ein Polyvinylalkohol, oder ein hydrophiles PVOH-Copolymer. Vorteilhaft ist bei der Verwendung von Polyvinylalkoholen ein mittlerer bis hoher Verseifungsgrad von 60-95 %, bevorzugt von 70-90%, wie z.B. das Gohsenol KP08R (Verseifungsgrad 71-73,5 %) damit die Löslichkeit in Wasser gegeben ist, ohne dass der Rohstoff zu schnell abgewaschen werden kann. Auch niedriger verseifte Copolymere sind möglich, wenn anstelle der Acetatgruppe eine die Löslichkeit in Wasser vereinfachende Gruppe enthalten ist. In diesem Fall wird ein Teil der Acetatgruppen in dem Polyvinylakohol durch Polyethylenglycol ersetzt. Ein Beispiel für einen solchen Polyvinylalkohol ist GohsenX-LW200, welches trotz eines Verseifungsgrades von nur 46-53 % hervorragend wasserlöslich ist.

Das Polyvinylalkohol-Copolymer gemäß der vorliegenden Erfindung ist ein Alkandiol-Polyvinylalkohol-Copolymer. Das Alkandiol-Polyvinylalkohol-Copolymer ist bevorzugt ausgewählt aus der Gruppe bestehend aus Propandiol-Polyvinylalkohol-Copolymer, Butandiol-Polyvinylalkohol-Copolymer, Pentandiol-Polyvinylalkohol-Copolymer oder Mischungen daraus. Besonders bevorzugt ist das Polyvinylalkohol-Copolymer Butandiol-Polyvinylalkohol-Copolymer.

Diese besonders bevorzugte Klasse von Copolymereren werden unter dem Handelsnamen Nichigo G-Polymer vertrieben und stellen Butandiol-Vinylalkohol-Copolymere dar, die bei Verseifungsgraden von 86-99 % gut wasserlöslich sind, im wässrigen Medium eine geringe Schaumneigung zeigen und als Teil einer Beschichtung auf PET von Wassertropfen gut benetzt werden, z.B. das G-Polymer OKS8089.

Allgemein wären auch Polyethylenglykol oder Celluloseether denkbar, jedoch lassen sich diese Stoffklassen oft nur schwer im sog. Inline-Verfahren auf die Folie beschichten, bzw. haben negative Auswirkungen auf die Regenerierbarkeit / Rezyklierbarkeit der Folie. Polyethylenglykole weisen eine Zersetzungstemperatur auf, die im Bereich der Herstellungstemperaturen von Polyesterfolie liegt, so dass eine unbeschadete Herstellung nicht möglich ist. Werden die Folien mit einer Celluloseether enthaltenden Beschichtung versehen, so führt dies zu einer schlechten Regenerierbarkeit der Folie, da die bei der Regenerierung auftretenden Temperaturen von über 250°C zu einer Zersetzung der Celluloseether führt, die sich in einer deutlich wahrnehmbaren Gelbfärbung des resultierenden Regenerates äußert. So hergestelltes Regenerat kann nicht mehr zur Herstellung von Folien eingesetzt werden, deren optische Eigenschaften eine Schlüsselqualifikation darstellen.

Die Komponente a) wird in einer Konzentration von 2 bis 10 Gew.-% und bevorzugt 4 bis 8 Gew.-% bezogen auf den Gesamtfeststoffgehalt der Beschichtungslösung eingesetzt. Sie zeichnet sich durch hervorragende filmbildende Eigenschaften aus, insbesondere im Inline-Verfahren.

Als Komponente b) können anorganische und/oder organische Partikel, wie pyrogene Kieselsäure, anorganische Alkoxide, Silizium, Aluminium oder Titan enthalten (wie beschrieben in DE 698 33 711), Kaolin, vernetzte Polystyrol- oder Acrylat-Partikel eingesetzt werden. Bevorzugt werden poröses $SiO_2$, wie amorphe Kieselsäure, sowie pyrogene Metalloxide, oder Aluminiumsilikate (Zeolithe) eingesetzt. Diese werden in einer Konzentration von 1 bis 6 Gew.-% (bzgl. der Beschichtungsdispersion), bevorzugt 2 bis 4 Gew.-% (bzgl. der Beschichtungsdispersion) eingesetzt. Des Weiteren können zusätzlich oder ausschließlich $SiO_2$-Nanopartikel eingesetzt werden, um die Benetzbarkeit der Folienoberfläche noch weiter zu erhöhen sowie genügend Wasser zu absorbieren, so dass ein homogener Wasserfilm gebildet wird und somit der Antibeschlag-Eindruck entsteht. Insbesondere geeignet sind hydrophile pyrogene Kieselsäuren.

Weiterhin kann die Beschichtungsdispersion eine Komponente c) in einer Konzentration von 2 bis 10 Gew.-% (bzgl. der Beschichtungsdispersion), bevorzugt 4 bis 8 Gew.-% (bzgl. der Beschichtungsdispersion) enthalten. Dieses ist bevorzugt ein Oxazolin-modifiziertes Polymer (Oxazolin basierter Vernetzer), das z.B. unter dem Handelsnamen EPOCROS WS-500 und insbesondere EPOCROS WS-700 von Nippon Shokubai erhältlich ist. Durch die Verwendung des Vernetzers in den genannten Mengen wird die Abriebfestigkeit der Beschichtung verbessert.

Optional können der Dispersion weitere Tenside zugegeben werden, um den Antifog Effekt zu verbessern. Dies wird jedoch mit dem Nachteil erkauft, die permanente Antifogbeschichtung nicht mehr so gut im Inline-Verfahren auf die Folien applizieren zu können. Es wird vermutet, dass die Tenside, im Gegensatz zu den übrigen Polymeren Bestandteilen der Beschichtungsdispersion, bereits während der Folienherstellung verdampfen können, und so für den intendierten Zweck nicht weiter zur Verfügung stehen. Im Offline-Verfahren kann diesem Umstand zwar durch Vorwahl schonenderer Trocknungsbedingungen begegnet werden. Nachteilig an einem Offline-Verfahren ist jedoch der zusätzliche Aufwand in Form mindestens eines weiteren Verarbeitungsschrittes, so dass auf weitere Tenside nach Möglichkeit verzichtet werden sollte. Mögliche Tenside zur weiteren Zugabe umfassen beispielsweise Polyalkylenglycolether, Polysorbat 80 (Polyoxyethylen(20)-sorbitanmonooleat), Sulfobernsteinsäureester, Alkylsulfate, Alkylbenzolsulfate. Mögliche Zugabemengen betragen bis zu 7 Gew.-% in der Beschichtungsdispersion, bevorzugt jedoch < 0,2 Gew.-%, und idealerweise 0 Gew.-%.

Des Weiteren kann die Beschichtungslösung einen oder mehrere Entschäumer enthalten. Der Einsatz von Entschäumern hat sich insbesondere bei hoch konzentrierten Dispersionen als günstig erweisen, da hierbei die Schaumbildung am Antragswerk reduziert werden kann, wodurch ein stabiler Produktionsprozess gewährleistet wird. Dabei muss jedoch in Kauf genommen werden, dass die Zugabe von Entschäumern, oder auch weiteren Amphoteren oder Tensiden, potentiell zu Beschichtungsinhomogenitäten auf der Folienoberfläche führen kann. Der Einsatz von solchen Additiven muss daher sorgfältig abgewogen werden, und sollte in der Dosierung eher niedrig gehalten werden.

Oberhalb der erfindungsgemäßen Grenzen sinkt die Wirtschaftlichkeit der Folie, aufgrund der Verwendung eines Überschusses an Beschichtungskomponenten. Unterhalb der erfindungsgemäßen Grenzen treten die gewünschten Antibeschlag-Eigenschaften nur begrenzt (nicht permanent) auf, da die gewünschte Beschichtungsstärke zu gering ist. Durch die Einhaltung der erfindungsgemäßen Grenzen liefert das Reaktionsprodukt der Beschichtungsdispersion, speziell auf einer biaxial verstreckten Polyesterfolie, einen guten Antibeschlageffekt, eine hohe Abwaschresistenz und eine hohe Hydrophilie.

**Verfahren zur Herstellung**

Das Herstellungsverfahren für Polyesterfolien wird z. B. beschrieben im "Handbook of Thermoplastic Polyesters, Ed. S. Fakirov, Wiley-VCH, 2002" oder im Kapitel "Polyesters, Films" in der "Encyclopedia of Polymer Science and Engineering, Vol. 12, John Wiley & Sons, 1988". Das bevorzugte Verfahren zur Herstellung der Folie enthält folgende Schritte. Die Rohstoffe werden in je einem Extruder pro Schicht aufgeschmolzen und durch eine ein- oder mehrschichtige Breitschlitzdüse auf eine gekühlte Abzugswalze extrudiert. Diese Folie wird anschließend erneut erhitzt und in Längs (MD o. Maschinenrichtung)- und Querrichtung (TD o. Querrichtung) bzw. in Quer- und Längsrichtung verstreckt ("orientiert"). Die Folientemperaturen im Streckprozess liegen im Allgemeinen 10 bis 60 °C über der Glasübergangstemperatur Tg des verwendeten Polyesters, das Streckverhältnis der Längsstreckung liegt üblicherweise bei 2,5 bis 5,0, insbesondere bei 3,0 bis 4,5, das der Querstreckung bei 3,0 bis 5,0, insbesondere bei 3,5 bis 4,5. Die Längsstreckung kann auch gleichzeitig mit der Querstreckung (Simultanstreckung) oder in jeder denkbaren Sequenzfolge durchgeführt werden. Es folgt die Thermofixierung der Folie bei Ofentemperaturen von 180 bis 240 °C, insbesondere von 210 bis 230 °C. Anschließend wird die Folie abgekühlt und aufgewickelt.

Die erfindungsgemäße biaxial orientierte Polyesterfolie wird vorzugsweise In-Line beschichtet, d.h. die Beschichtung wird während des Folienherstellprozesses vor der Längs- und/oder Querstreckung aufgebracht. Um eine gute Benetzung der Polyesterfolie mit der wässrigen Beschichtungszusammensetzung zu erreichen, wird die Oberfläche bevorzugt zunächst coronabehandelt. Die Beschichtung kann mit einem gängigen geeigneten Verfahren wie mit einem Schlitzgießer oder einem Sprühverfahren aufgetragen werden. Besonders bevorzugt ist die Aufbringung der Beschichtung mittels des "Reverse gravure-roll coating" Verfahrens, bei dem sich die Beschichtung äußerst homogen mit Antragsgewichten (nass) zwischen 1,0 und 3,0 $g/m^2$ auftragen lässt. Ebenfalls bevorzugt ist die Auftragung durch das Meyer-Rod-Verfahren, mit dem sich größere Beschichtungsstärken erzielen lassen. Die Beschichtung auf der fertigen Folie weist bevorzugt eine Dicke von mindestens 60 nm bevorzugt mindestens 70 nm und insbesondere mindestens 80 nm auf. Das In-Line-Verfahren ist hierbei wirtschaftlich attraktiver, da bei einer beidseitigen Beschichtung, die Antifog- und Antireflex-Beschichtungen gleichzeitig aufgetragen werden können, so dass ein Prozessschritt (s.u.: Off-Line Verfahren) eingespart werden kann.

In einem weiteren Verfahren werden die oben beschriebenen Beschichtungen durch Off-Line-Technologie aufgetragen. Dabei wird die Antireflex- und/oder Antifog-Beschichtung gemäß der vorliegenden Erfindung mittels Off-Line-Technologie in einem zusätzlichen, der Folienherstellung nachgeordnetem Prozessschritt auf die entsprechende Oberfläche der Polyesterfolie aufgebracht, wobei eine Gravurwalze (forward gravure) verwendet wird. Die Höchstgrenzen werden durch die Verfahrensbedingungen und die Viskosität der Beschichtungsdispersion festgelegt und finden ihre Obergrenze in der Verarbeitbarkeit der Beschichtungsdispersion. Während es prinzipiell möglich ist, sowohl die Antifog-, als auch die Antireflex-Beschichtung auf der gleichen Oberflächenseite der Basisschicht B anzubringen, hat es sich als ungünstig erwiesen, die Antifog-Beschichtung auf eine Unterbeschichtung aufzubringen (Antifog-Beschichtung auf eine Antireflex-Beschichtung), da zum einen der Materialverbrauch steigt und zum anderen ein weiterer Prozessschritt benötigt wird, wodurch die Wirtschaftlichkeit der Folie herabgesetzt wird. Bei manchen In-Line-Beschichtungsverfahren können die insbesondere bevorzugten Beschichtungsdicken aufgrund der hohen Viskosität der Beschichtungsdispersion nicht erreicht werden. In diesem Fall bietet es sich an das Off-Line-Beschichtungsverfahren zu wählen, da hier Dispersionen mit niedrigeren Feststoffgehalten und höheren Nassanträgen verarbeitet werden können, wodurch sich eine einfachere Verarbeitbarkeit ergibt. Außerdem können bei Off-Line-Beschichtungen höhere Beschichtungsdicken erreicht werden, was sich bei Anwendungen, die eine hohe Anforderung an die Lebenszeit der Antibeschlag-Wirkung haben, als vorteilhaft erwiesen hat. So können durch das Off-Line Verfahren besonders einfach Beschichtungsdicken von $\geq 80$ nm erzielt werden, wodurch sich ein besserer permanenter Antibeschlag-Effekt erzielen lässt, jedoch keine weitere Erhöhung der Transparenz.

## Anwendung

Die erfindungsgemäßen Folien eignen sich hervorragend als hochtransparente Konvektionssperre, insbesondere zur Herstellung von Energiesparmatten in Gewächshäusern. Hierbei wird die Folie üblicherweise in schmale Streifen geschnitten, aus denen anschließend zusammen mit Polyestergarn (auch dieses muss UVstabilisiert sein) ein Gewebe/Gelege hergestellt wird, welches im Gewächshaus aufgehängt wird. Die Streifen aus erfindungsgemäßer Folie können dabei mit Streifen aus anderen Folien kombiniert werden (insbesondere mit Folien mit einer Lichtstreuwirkung oder weiteren Transparenzerhöhung).
Alternativ kann auch die Folie selbst (Vollfläche, kein Gewebe) im Gewächshaus installiert werden.

## Methoden

Zur Charakterisierung der Rohstoffe und der Folien wurden im Rahmen der vorliegenden Erfindung die folgenden Messmethoden benutzt:

## UV/Vis Spektren bzw. Transmission bei Wellenlänge x

Die Folien wurden in Transmission in einem UV/Vis Zweistrahlspektrometer (Lambda 950S) der Firma Perkin Elmer USA gemessen. Eine etwa (3 x 5) cm große Folienprobe wird dazu über eine Flachprobenhaltevorrichtung senkrecht zum Messstrahl in den Strahlengang eingelegt. Der Messstrahl führt über eine Ulbrichtkugel hin zum Detektor, wo die Intensität zur Bestimmung der Transparenz bei gewünschter Wellenlänge bestimmt wird.
Als Hintergrund dient Luft. Die Transmission wird bei der gewünschten Wellenlänge abgelesen.

## Trübung, Transparenz

Die Prüfung dient zur Bestimmung der Trübung und Transparenz von KunststoffFolien, bei denen die optische Klarheit bzw. Trübung für den Gebrauchswert wesentlich ist. Die Messung erfolgt an dem Hazegard Hazemeter XL-21 1 der Fa. BYK Gardner nach ASTM D 1003-61.

## Bestimmung des Brechungsindex in Abhängigkeit der Wellenlänge

Um den Brechungsindex eines Foliensubstrats und einer aufgebrachten Beschichtung in Abhängigkeit der Wellenlänge zu bestimmen, bedient man sich der spektroskopischen Ellipsometrie.
Die Analysen wurden in Anlehnung an folgende Referenz durchgeführt:
J. A. Woollam et al.: Overview of variable-angle spectroscopic ellipsometry (VASE): I. Basic theory and typical applications. In: Optical Metrology, Proc. SPIE, Vol. CR 72 (Ghanim A. A.-J., Ed.); SPIE - The International Society of Optical Engineering, Bellingham, WA, USA (1999), p. 3-28.
Dazu wurde zunächst die Basisfolie ohne Beschichtung oder modifizierte Coexseite analysiert. Zur Unterdrückung der Rückseitenreflexion wurde die Folienrückseite mit einem Schleifpapier mit möglichst feiner Körnung (beispielsweise P1000) angeraut. Die Folie wurde anschließend mit einem spektroskopischen Ellipsometer vermessen, hier ein M-2000 der Firma J. A. Woollam Co., Inc., Lincoln, NE, USA, das mit einem rotierenden Kompensator ausgestattet ist. Die Maschinenrichtung der Probe lag parallel zum Lichtstrahl. Die vermessene Wellenlänge lag im Bereich von 370 bis 1000 nm, die Messwinkel betrugen 65, 70 und 75 °.

Die ellipsometrischen Daten Ψ und Δ wurden anschließend mit einem Modell nachempfunden. Dazu eignete sich im vorliegenden Fall das Cauchy-Modell $n(\lambda) = A + \dfrac{B}{\lambda^2} + \dfrac{C}{\lambda^4}$ (Wellenlänge λ in μm). Die Parameter A, B und C werden so variiert, dass die Daten möglichst gut mit dem gemessenen Spektrum Ψ (Amplitudenverhältnis) und Δ (Phasenverhältnis) übereinstimmen. Zur Prüfung der Güte des Modells kann der MSE-Wert einbezogen werden, der möglichst klein sein soll und Modell mit gemessenen Daten (Ψ(λ) und Δ(λ)) vergleicht.

$$MSE = \sqrt{\frac{1}{3a-m}\sum_{i=1}^{a}\left[\left(N_{E,i}-N_{G,i}\right)^2 + \left(C_{E,i}-C_{G,i}\right)^2 + \left(S_{E,i}-S_{G,i}\right)^2\right]} \cdot 1000$$

a = Anzahl Wellenlängen, *m* = Anzahl Fit Parameter, N = cos(2Ψ), C = sin(2Ψ) cos(Δ),
S = sin(2Ψ) sin(Δ)

Die erhaltenen Cauchy-Parameter A, B und C für die Basisfolie erlauben die Berechnung des Brechungsindex *n* in Abhängigkeit der Wellenlänge, gültig im vermessenen Bereich 370 bis 1000 nm.

Die Beschichtung oder eine modifizierte coextrudierte Schicht kann analog analysiert werden. Auch zur Bestimmung der Beschichtung und/oder der coextrudierten Schicht muss die Folienrückseite, wie oben beschrieben, angeraut werden. Hier kann man ebenfalls das Cauchy-Modell verwenden, um den Brechungsindex in Abhängigkeit der Wellenlänge zu beschreiben. Die jeweilige Schicht befindet sich jetzt jedoch auf dem bereits bekannten Substrat, da die Parameter der Folienbasis nun schon bekannt sind, sollten sie bei der Modellierung konstant gehalten werden, was in der jeweiligen Auswertesoftware berücksichtigt wird (CompleteEASE oder WVase). Die Dicke der Schicht beeinflusst das erhaltene Spektrum und muss bei der Modellierung berücksichtigt werden.

**Oberflächenenergie**

Die Oberflächenenergie (Surface free energy) wurde nach DIN 55660-1,2 bestimmt. Als Testflüssigkeiten dienen Wasser, 1,5-Pentandiol und Diiodmethan. Die Bestimmung der statischen Kontaktwinkel zwischen der beschichteten Folienoberfläche und Tangente der Oberflächenkontur eines horizontal liegenden Flüssigkeitstropfens, erfolgte mittels des Messgerätes DSA-100 der Firma Krüss GmbH, Hamburg, Deutschland. Die Bestimmung fand bei 23 °C ± 1 °C und 50 % relative Feuchte auf entladenen und in Standardklima mindestens 16 Stunden vorher konditionierten Folienproben statt. Die Auswertung der Oberflächenenergie σs (gesamt) nach der Methode von Owens-Wendt-Rabel-Kaelble (OWRK) erfolgte mittels der zum Gerät gehörenden Software Advance Ver. 4 mit folgenden Parametern der Oberflächenspannung für die drei Standardflüssigkeiten:

| Flüssigkeit | Oberflächenspannung [mN/m] | | |
|---|---|---|---|
| | σ$_L$ (Total) | σ$_{L,D}$ (Dispers) | σ$_{L,P}$ (Polar) |
| Destilliertes Wasser | 72,8 | 21,8 | 51,0 |
| 1,5-Pentandiol | 43,3 | 27,6 | 15,7 |
| Diiodmethan | 50,8 | 49,5 | 1,3 |
| Tabelle 1. Parameter der Oberflächenspannung für drei Standardflüssigkeiten. | | | |

**Bestimmung der Antibeschlag-Wirkung**

Cold-Fog-Test: Die Antibeschlag-Eigenschaften der Polyesterfolien werden wie folgt bestimmt: In einem auf 23 °C und 50 % relative Luftfeuchtigkeit temperierten Labor werden Folienmuster auf eine Menüschale (Länge ca. 17 cm, Breite ca. 12 cm, Höhe ca. 3 cm) aus amorphem Polyethylenterephthalat (=APET), die ca. 50 ml Wasser enthält, gesiegelt. Die Schalen werden in einem auf 4 °C temperierten Kühlschrank gelagert und in einem Winkel von 30° aufgestellt und nach jeweils 12h, 24h, 1 Woche, 1 Monat, 1 Jahr zur Beurteilung entnommen. Die Kondensatbildung beim Abkühlen der 23 °C warmen Luft auf Kühlschranktemperatur wird geprüft. Eine mit einem wirksamen Antibeschlag-Mittel ausgerüstete Folie ist auch nach der Kondensatbildung transparent, da das Kondensat einen zusammenhängenden, transparenten Film bildet. Ohne wirksames Antibeschlag-Mittel führt die Bildung eines feinen Tröpfchennebels auf der Folienoberfläche zu einer verminderten Transparenz der Folie; im ungünstigsten Fall ist der Inhalt der Menüschale nicht mehr sichtbar.

Eine weitere Untersuchungsmethode ist der so genannte Heiß-Dampf- oder Hot-Fog-Test. Hierzu wird ein QCT Kondensations-Tester von Q-Lab verwendet. Dieser simuliert die Antibeschlag-Effekte von klimatischen Feuchtigkeitseinflüssen, indem warmes Wasser direkt auf der Folie kondensiert wird. In wenigen Tagen bzw. Wochen können somit Ergebnisse reproduziert werden, die durch Feuchtigkeit innerhalb von Monaten oder Jahren verursacht werden. Dazu wird das Wasser im QCT-Kondensationsgerät auf 60 °C temperiert und die Folie in der entsprechenden Halterung eingespannt. Dabei hat die bespannte Folie einen Neigungswinkel von ca. 30°. Die Beurteilung ist die Gleiche wie zuvor oben beschrieben. Mit diesem Test können die Langzeit-Antibeschlag-Wirkung bzw. die Abwaschbeständigkeit der Folie geprüft werden, da der Dampf ständig an der Folie kondensiert und wieder abläuft und/oder abtropft. Leichtlösliche Substanzen werden so abgewaschen und die Antibeschlag-Wirkung lässt nach. Diese Untersuchung wird ebenfalls in einem auf 23 °C und 50 % relative Luftfeuchtigkeit temperierten Labor durchgeführt.

Die Beurteilung der Antibeschlag-Wirkung (Antifog-Test) erfolgt visuell.

Rating:

A Eine transparente Folie, die kein sichtbares Wasser zeigt, vollständig transparent ist, exzellent

B Einige zufällig, unregelmäßig verteilte Wassertropfen auf der Oberfläche, diskontinuierlicher Wasserfilm, akzeptabel

C Eine vollständige Schicht von großtransparenten Wassertropfen, schlechte Durchsicht, Linsenbildung, Tropfenbildung, schlecht

D Eine opake oder transparente Schicht von großen Wassertropfen, keine Durchsicht, schlechte Lichtdurchlässigkeit, sehr schlecht

**SV-Wert (Standard viscosity)**

Die Standardviskosität in verdünnter Lösung SV wurde, angelehnt an DIN 53 728 Teil 3, in einem Ubbelohde Viskosimeter bei $(25 \pm 0,05)°C$ gemessen. Dichloressigsäure (DCE) wurde als Lösemittel verwendet. Die Konzentration des gelösten Polymers betrug 1 g Polymer / 100 ml reines Lösemittels. Die Auflösung des Polymers erfolgte 1 Stunde bei 60°C. Wurden die Proben nach dieser Zeit nicht vollständig gelöst, wurden noch bis zwei Auflösungsversuche jeweils 40 Min bei 80°C durchgeführt und die Lösungen anschließend 1 Stunde bei einer Drehzahl von 4100 min$^{-1}$ zentrifugiert.

Aus der relativen Viskosität ($\eta_{rel} = \eta / \eta_s$) wird der dimensionslose SV-Wert wie folgt ermittelt:

$$SV = (\eta_{rel} - 1) \times 1000$$

Der Anteil an Partikeln in der Folie bzw. Polymerrohstoff wurde mittels Aschebestimmung ermittelt und durch entsprechende Mehreinwaage korrigiert. D.h.:

$$\text{Einwaage} = (\text{Einwaage entsprechend 100\% Polymer}) / [\,(100 - \text{Partikelgehalt in Gew.-\%})/100\,]$$

**Beispiele:**

Zur Herstellung der nachfolgend beschriebenen Folien wurden folgende Ausgangsmaterialien verwendet:

PET1 = Polyethylenterephthalatrohstoff aus Ethylenglykol und Terephthalsäure mit einem SV Wert von 820 und DEG-Gehalt von 0,9 Gew.-% (Diethylenglykolgehalt als Monomer).

PET2 = PCR Rohstoff, hergestellt aus PET-Flakes die aus sog. "PET post-consumer articles" gewonnen wurden (hauptsächlich Flaschen und Trays aus PET) erhältlich z.B. unter dem Handelsnamen MOPET (R), Fa. Morssinkhof. Der SV-Wert ist aufgrund des Aufkondensierungsprozess im Vergleich zu herkömmlichen PET erhöht, und beläuft sich oft auf Werte über 950, DEG-Gehalt ca. 1,5 Gew.-%.

PET3 = Polyethylentererphthalatrohstoff aus Ethylenglykol und Dimethylterephthalat mit einem SV Wert von 820 und DEG-Gehalt von 0,9 Gew.-% (Diethylenglykolgehalt als Monomer) und 1,5 Gew.-% Siliziumdioxid-Pigment Sylobloc 46 mit einem d50 von 2,5 µm. Hergestellt mittels PTA Verfahren. Katalysator Kaliumtitanyloxalat mit 18 ppm Titan. Umesterungskatalysator Zinkacetat.

PET4 = Polyethylenterephthalatrohstoff mit einem SV-Wert von 700, der 20 Gew.-% Tinuvin 1577 enthält, Der UV-Stabilisator hat folgende Zusammensetzung 2-(4,6-Diphenyl-1,3,5-triazin-2-yl)-5-(hexyl)oxy-phenol (®Tinuvin 1577 der Firma BASF, Ludwigshafen, Deutschland). Tinuvin 1577 hat einen Schmelzpunkt von 149 °C und ist bei 330 °C thermisch stabil.

PET5 = Polyethylenterephthalatrohstoff mit einem SV-Wert von 710, der 25 Mol-% Isophthalsäure als Co-Monomer enthält.

Die o. g. Rohstoffe wurden in je einen Extruder pro Schicht aufgeschmolzen und durch eine dreischichtige Breitschlitzdüse (ABA-Schichtfolge) auf eine gekühlte Abzugswalze extrudiert. Die so erhaltene amorphe Vorfolie wurde dann zunächst längsgestreckt. Die längsgestreckte Folie wurde in einem Coronaentladegerät coronabehandelt und danach durch Reversgravurbeschichtung mit der oben beschriebenen Lösung beschichtet. Verwendet wurde eine Gravurwalze mit einem Volumen von 6,6 cm$^3$/m$^2$. Danach wurde die Folie wurde bei einer Temperatur von 100 °C getrocknet und anschließend quergestreckt, fixiert und aufgerollt. Die Bedingungen in den einzelnen Verfahrensschritten waren:

| Längsstreckung: | Temperatur: | 80 - 115 °C |
| | Längsstreckverhältnis: | 3,8 |
| Querstreckung: | Temperatur: | 80 - 135 °C |
| | Querstreckverhältnis: | 3,9 |
| Fixierung: | | 2 s bei 225 °C |

**Beispiel 1:**

Deckschichten (A) und (C): Mischung aus

10 Gew.-% PET4

7,2 Gew.-% PET3

82,8 Gew.-% PET1

Basisschicht (B): Mischung aus

90 Gew.-% PET1

10 Gew.-% PET4

Beschichtung auf Deckschicht C (einseitig beschichtet):

**Beschichtung 1:**

Folgende Zusammensetzung der Beschichtungslösung wurde verwendet

- 84,3 Gew.-% entionisiertes Wasser
- 5,82 Gew.-% G-Polymer OKS 8089 (MCPP Europe GmbH)
- 6,05 Gew.-% Epocros WS700 (Nippon Shokubai Co., Ltd.)
- 3,83 Gew.-% Aerodisp W7622 (Evonik Resource Efficiency GmbH)

Die einzelnen Komponenten wurden langsam unter Rühren in entionisiertes Wasser gegeben und vor Verwendung für mindestens 30 min gerührt. Der Feststoffgehalt betrug 15 Gew.-%. Die Dicke der trockenen Beschichtung betrug 80 nm.

Wenn nicht anders beschrieben wird die Beschichtung im In-Line Prozess aufgetragen. Die Eigenschaften der so erhaltenen Folie sind in der Tabelle 2 widergegeben.

**Beispiel 2:**

Im Vergleich zu Beispiel 1 wurde auch die zweite Deckschicht (A) beschichtet.

Beschichtung auf der Deckschicht (C): wie in Beispiel 1

Die einzelnen Komponenten wurden langsam unter Rühren in entionisiertes Wasser gegeben und vor Verwendung für mindestens 30 min gerührt.

Der Feststoffgehalt betrug 15 Gew.-%. Die Dicke der trockenen Beschichtung betrug 80 nm.

**Beispiel 3:**

Im Vergleich zu Beispiel 1 wurde die Basis unter Nutzung von PCR Rohstoff hergestellt. In der so entstandenen Folie waren deutlich Spuren von kleinsten Verschmutzungen erkennbar, die aus dem PCR Rohstoff herrühren.

**Beispiele 4 und 5:**

Die Zusammensetzung der Folienschichten sowie die Beschichtungen sind in Tabelle 2 angegeben. Die Eigenschaften der so erhaltenen Folie sind in der Tabelle 2 widergegeben.

**Vergleichsbeispiel 1**

**Beschichtung 2:**

Beschichtung wie in EP 1 777 251 A1, bestehend aus einer hydrophilen Beschichtung, bei der das Trocknungsprodukt der Beschichtungszusammensetzung Wasser, einen Sulfopolyester, ein Tensid und optional ein haftvermittelndes Polymer enthält. Diese Folien weisen eine hydrophile Oberfläche auf, die das kurzfristige Beschlagen der Folien mit Wassertröpfchen verhindert. Folgende Zusammensetzung der Beschichtungslösung wurde verwendet:

- 1,0 Gew.-% Sulfopolyester (Copolyester aus 90 Mol-% Isophthalsäure und 10 Mol-% Natriumsulfoisophthalsäure und Ethylenglykol)

- 1,0 Gew.-% Acrylat-Copolymer bestehend aus 60 Gew.-% Methylmethacrylat, 35 Gew.-% Ethylacrylat und 5 Gew.-% N-Methylolacrylamid

- 1,5 Gew.-% Diethylhexylsulfosuccinat Natriumsalz (Lutensit A-BO BASF AG).

Die Eigenschaften der so erhaltenen Folie sind in der Tabelle 2 widergegeben.

**Tabelle 2:** Eigenschaften der Folien der Beispiele

| Schicht | | Beispiel 1 | Beispiel 2 | Beispiel 3 | Beispiel 4 | Beispiel 5 | Vergleichsbeispiel 1 |
|---|---|---|---|---|---|---|---|
| Schicht | Foliendicke | 19 | 19 | 19 | 19 | 19 | 19 |
| | Dicke A | 1 | 1 | 1 | 1 | 1 | 1 |
| | Dicke B | 17 | 17 | 17 | 17 | 17 | 17 |
| | Dicke C | 1 | 1 | 1 | 1 | 1 | 1 |
| Beschichtung auf Seite A | | | Trockendicke 75 nm. Antifog-Beschichtung: 1 | Trockendicke 80 nm. Antifog-Beschichtung: 1 | Trockendicke 75 nm. Acrylatbeschichtung und Antragsmethode wie in Bsp. 1 aus EP 0144948 | | |
| Beschichtung auf Seite C | | Trockendicke 80 nm. Antifog-Beschichtung: 1 | Trockendicke 80 nm. Antifog-Beschichtung: 1 | Trockendicke 80 nm. Antifog-Beschichtung: 1 | Trockendicke 80 nm. Antifog-Beschichtung: 1 | Trockendicke 80 nm. Antifog-Beschichtung: 1 | Trockendicke 40 nm. Antifog-Beschichtung: 2 |
| A-Schicht | PET 1 | 82.8 | 82.8 | 82.8 | 82.8 | 32.8 | 82.8 |
| | PET 2 | | | | | | |
| | PET 3 | 7,2 | 7,2 | 7,2 | 7,2 | 7,2 | 7,2 |
| | PET 4 | 10,0 | 10,0 | 10,0 | 10,0 | 10,0 | 10,0 |
| | PET 5 | 0 | 0 | 0 | 0 | 50 | 0 |
| B-Schicht | PET 1 | 90 | 90 | 60 | 90 | 90 | 90 |
| | PET 2 | | | 30 | | | |
| | PET 4 | 10 | 10 | 10 | 10 | 10 | 10 |
| C-Schicht | PET 1 | 82.8 | 82.8 | 82.8 | 82.8 | 82,8 | 82.8 |
| | PET 2 | | | | | | |
| | PET 3 | 7,2 | 7,2 | 7,2 | 7,2 | 7,2 | 7,2 |
| | PET 4 | 10,0 | 10,0 | 10,0 | 10,0 | 10,0 | 10,0 |
| Transparenz (Bahnmitte) | in % | 92 | 94,8 | 94,9 | 94,2 | 93,7 | 91,2 |

EP 3 985 052 A1

| | | Beispiel 1 | Beispiel 2 | Beispiel 3 | Beispiel 4 | Beispiel 5 | Vergleichsbeispiel 1 |
|---|---|---|---|---|---|---|---|
| Trübung | | 8,3 | 20,2 | 21,7 | 14,3 | 10,6 | 10,0 |
| UV-Stabilität UTS | in % | 70 | 70 | 63 | 72 | 65 | 68 |
| Oberflächen-energie $\sigma_s$ (gesamt) (Seite C) | [mN/m] | 58 | 58 | 61 | 58 | 59 | 49 |
| Cold-Fog Test | | A | A | A | A | A | C |
| Hot-Fog Test | | A | A | A | A | A | D |

**Patentansprüche**

1.  Ein- oder mehrschichtige beschichtete Polyesterfolie mit einer Transparenz von mindestens 92%, wobei die Polyesterfolie eine erste und eine zweite Oberfläche aufweist, wobei auf mindestens einer der Oberflächen der Polyesterfolie eine permanente Antifog-Beschichtung aufgebracht ist, und wobei die Antifog-Beschichtung mindestens ein wasserlösliches Polymer, ein anorganisches, hydrophiles Material und einen Vernetzer umfasst, wobei das wasserlösliche Polymer ein Polyvinylalkohol oder ein hydrophiles Polyvinylalkohol-Copolymer ist.

2.  Polyesterfolie nach Anspruch 1, umfassend eine Basisschicht (B) und optional eine Deckschicht (A) oder eine Deckschicht (A) und eine Deckschicht (C), wobei, falls vorhanden, die Deckschicht (A) auf der ersten oder der zweiten Oberfläche der Polyesterfolie aufgebacht ist und, falls vorhanden, die Deckschicht (C) auf der der Deckschicht (A) gegenüberliegenden Oberfläche der Polyesterfolie aufgebracht ist.

3.  Polyesterfolie nach Anspruch 1 oder 2, **dadurch gekennzeichnet, dass** die Dicke der Polyesterfolie mindestens 10 $\mu$m und maximal 40 $\mu$m, bevorzugt mindestens 14 $\mu$m und maximal 23 $\mu$m, besonders bevorzugt mindestens 14,5 $\mu$m und maximal 20 $\mu$m beträgt.

4.  Polyesterfolie nach einem oder mehreren der Ansprüche 1 bis 3, **dadurch gekennzeichnet, dass** die Basisschicht zu mindestens 70 Gew.-% aus einem thermoplastischen Polyester besteht, wobei der thermoplastische Polyester zu mindestens 90 Mol-%, bevorzugt mindestens 95 Mol-% aus von Ethylenglykol- und Terephthalsäure abgeleiteten Einheiten oder aus Ethylenglykol- und Naphthalin-2,6-dicarbonsäure abgeleiteten Einheiten besteht.

5.  Polyesterfolie nach einem oder mehreren der Ansprüche 1 bis 4, **dadurch gekennzeichnet, dass** die Polyesterfolie Partikel enthält, ausgewählt aus der Gruppe bestehend aus Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Titandioxid, Kaolin oder partikelförmige Polymere wie z. B. vernetzte Polystyrol- oder Arcrylat-Partikel.

6.  Polyesterfolie nach einem oder mehreren der Ansprüche 1 bis 5, **dadurch gekennzeichnet, dass** die Basisschicht (B), und falls vorhanden, die Deckschichten (A) und (C) einen UV-Stabilisator umfassen.

7.  Polyesterfolie nach Ansprüche 6, **dadurch gekennzeichnet, dass** der UV-Stabilisator ausgewählt ist aus der Gruppe bestehend aus Triazine, Benzotriazole, Benzoxazinone, wobei Triazine bevorzugt sind, wobei die Basisschicht, und falls vorhanden, die Deckschichten (A) und (C) den UV-Stabilisator in einer Menge von 0,3 bis 3 Gew.-%, bevorzugt von 0,75 bis 2,8 Gew.-% enthalten, bezogen auf das Gewicht der jeweiligen Schicht.

8.  Polyesterfolie nach einem oder mehreren der Ansprüche 1 bis 7, **dadurch gekennzeichnet, dass** die Antifog-Beschichtung einen geringeren Brechungsindex aufweist als die Polyesterfolie.

9.  Polyesterfolie nach einem oder mehreren der Ansprüche 1 bis 8, **dadurch gekennzeichnet, dass** die Antifog-Beschichtung eine Dicke von mindestens 60 nm und maximal 150 nm, bevorzugt mindestens 70 nm und maximal 130 nm, besonders bevorzugt von mindestens 80 nm und maximal 120 nm aufweist.

10. Polyesterfolie nach einem oder mehreren der Ansprüche 1 bis 9, **dadurch gekennzeichnet, dass** auf der ersten oder der zweiten Oberflächen der Polyesterfolie eine Antifog-Beschichtung aufgebracht ist und die der Antifog-Beschichtung gegenüberliegenden Oberfläche der Polyesterfolie eine Antireflex-Modifikation aufweist, die

    (1) eine Antireflexbeschichtung ist, oder
    (2) durch eine Deckschichtmodifikation gebildet wird.

11. Polyesterfolie nach Anspruch 10, **dadurch gekennzeichnet, dass** die Deckschichtmodifikation durch Co-Extrusion auf der Basisschicht B gebildet wird, wobei die Deckschichtmodifikation einen Polyester umfasst, der einen geringeren Brechungsindex als der Polyester der Basisschicht B aufweist.

12. Polyesterfolie nach Anspruch 10 oder 11, **dadurch gekennzeichnet, dass** die Antifog-Beschichtung eine Dicke von mindestens 30 nm, bevorzugt mindestens 40 nm, besonders bevorzugt mindestens 50 nm und maximal 150 nm aufweist.

**13.** Verfahren zur Herstellung einer beschichteten Polyesterfolie nach einem oder mehreren der Ansprüche 1 bis 12, **dadurch gekennzeichnet, dass** die Polyesterfolie mittels Extrusion hergestellt und biaxial gestreckt wird, eine Antifog Beschichtungsmasse In-Line nass an die Polyesterfolie angetragen wird, und die beschichtete Polyesterfolie thermofixiert und aufgerollt wird.

**14.** Verfahren zur Herstellung einer beschichteten Polyesterfolie nach einem oder mehreren der Ansprüche 1 bis 12, **dadurch gekennzeichnet, dass** Polyesterfolie mittels Extrusion hergestellt, biaxial gestreckt, thermofixiert und aufgerollt wird, anschließend offline mittels üblicher Beschichtungstechnologie eine Antifog-Beschichtungszusammensetzung an die Polyesterfolie nass angetragen wird, und die Polyesterfolie anschließend getrocknet und aufgewickelt wird.

**15.** Verwendung der beschichteten Polyesterfolie nach einem der Ansprüche 1 bis 12 zur Herstellung von Energiesparmatten in Gewächshäusern.

Europäisches Patentamt
European Patent Office
Office européen des brevets

**EUROPÄISCHER RECHERCHENBERICHT**

Nummer der Anmeldung

EP 21 20 2383

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 047 551 A2 (MINNESOTA MINING & MFG [US]) 2. November 2000 (2000-11-02) | 1-14 | INV. C08J7/04 |
| Y | * Zusammenfassung * | 3,7,9, | C08J7/054 |
| | * Seite 8, Absatz 53 * | 12-14 | C08J7/056 |
| A | * Seite 9, Absatz 71 * | 15 | B32B27/08 |
| | * Seite 10, Spalte 17, Absatz 74-76 * | | B32B37/06 |
| | * Seite 13, Absatz 105 – Seite 16, Absatz 139; Beispiele 1-7 * | | |
| | * Ansprüche 1-10 * | | |
| | ----- | | |
| X | EP 1 232 058 A1 (3M INNOVATIVE PROPERTIES CO [US]) 21. August 2002 (2002-08-21) | 1-14 | |
| Y | * Zusammenfassung * | 3,7,9, | |
| | * Seite 4, Absatz 28 – Seite 5 * | 12-14 | |
| A | * Seite 11, Absatz 69-73 * | 15 | |
| | * Seite 13, Absatz 88 * | | |
| | * Seite 13, Absatz 96 – Seite 14, Absatz 100 * | | |
| | * Ansprüche 1-18 * | | |
| | ----- | | |
| X | EP 3 613 592 A1 (MITSUBISHI POLYESTER FILM GMBH [DE]) 26. Februar 2020 (2020-02-26) | 1-14 | RECHERCHIERTE SACHGEBIETE (IPC) |
| Y | * Zusammenfassung * | 3,7,9, | C08J |
| | * Seite 2, Absatz 8 – Seite 3 * | 12-14 | B32B |
| A | * Seite 5, Absatz 33 * | 15 | B29D |
| | * Seite 7, Absatz 50 – Seite 9, Absatz 59; Beispiele 1-3 * | | |
| | * Ansprüche 1-15 * | | |
| | ----- | | |
| A | US 4 478 909 A (TANIGUCHI TAKASHI [JP] ET AL) 23. Oktober 1984 (1984-10-23) * das ganze Dokument * | 1-15 | |
| | ----- | | |
| A,D | EP 1 647 568 B1 (MITSUBISHI POLYESTER FILM GMBH [DE]) 21. Januar 2009 (2009-01-21) * das ganze Dokument * | 1-15 | |
| | ----- | | |

Der vorliegende Recherchenbericht wurde für alle Patentansprüche erstellt

| Recherchenort | Abschlußdatum der Recherche | Prüfer |
|---|---|---|
| **München** | **4. März 2022** | **Schlembach, Sandra** |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

**ANHANG ZUM EUROPÄISCHEN RECHERCHENBERICHT**
**ÜBER DIE EUROPÄISCHE PATENTANMELDUNG NR.**                    EP 21 20 2383

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-03-2022

| Im Recherchenbericht angeführtes Patentdokument | Datum der Veröffentlichung | Mitglied(er) der Patentfamilie | Datum der Veröffentlichung |
|---|---|---|---|
| EP 1047551 A2 | 02-11-2000 | AU 2314899 A | 02-08-1999 |
| | | CN 1288413 A | 21-03-2001 |
| | | DE 69924354 T2 | 09-03-2006 |
| | | EP 1047551 A2 | 02-11-2000 |
| | | EP 1548045 A1 | 29-06-2005 |
| | | JP 4274696 B2 | 10-06-2009 |
| | | JP 2002509043 A | 26-03-2002 |
| | | KR 20010034063 A | 25-04-2001 |
| | | US 6352761 B1 | 05-03-2002 |
| | | US 2002064671 A1 | 30-05-2002 |
| | | US 2004086690 A1 | 06-05-2004 |
| | | US 2005244646 A1 | 03-11-2005 |
| | | US 2007098970 A1 | 03-05-2007 |
| | | US 2009062504 A1 | 05-03-2009 |
| | | WO 9936262 A2 | 22-07-1999 |
| EP 1232058 A1 | 21-08-2002 | AU 5465600 A | 23-04-2001 |
| | | DE 60022218 T2 | 30-03-2006 |
| | | EP 1232058 A1 | 21-08-2002 |
| | | JP 4515682 B2 | 04-08-2010 |
| | | JP 2003511729 A | 25-03-2003 |
| | | KR 20020035654 A | 13-05-2002 |
| | | US 2002005986 A1 | 17-01-2002 |
| | | US 2002122252 A1 | 05-09-2002 |
| | | WO 0126891 A1 | 19-04-2001 |
| EP 3613592 A1 | 26-02-2020 | DE 102018214185 A1 | 27-02-2020 |
| | | EP 3613592 A1 | 26-02-2020 |
| | | JP 2020073627 A | 14-05-2020 |
| | | KR 20200022351 A | 03-03-2020 |
| | | US 2020061897 A1 | 27-02-2020 |
| US 4478909 A | 23-10-1984 | CA 1159730 A | 03-01-1984 |
| | | EP 0051405 A1 | 12-05-1982 |
| | | US 4478909 A | 23-10-1984 |
| EP 1647568 B1 | 21-01-2009 | DE 102004049609 A1 | 13-04-2006 |
| | | EP 1647568 A1 | 19-04-2006 |
| | | JP 2006131901 A | 25-05-2006 |
| | | KR 20060052231 A | 19-05-2006 |
| | | US 2006078718 A1 | 13-04-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 1995018210 A
- EP 1647568 B1
- EP 1777251 B1
- EP 1152027 A1
- EP 1534776 A1
- EP 2216362 A1

- EP 3456762 A2
- EP 0144948 A
- EP 0769540 A
- DE 69833711
- EP 1777251 A1

**In der Beschreibung aufgeführte Nicht-Patentliteratur**

- Handbook of Thermoplastic Polyesters. Wiley-VCH, 2002
- Polyesters, Films. Encyclopedia of Polymer Science and Engineering. John Wiley & Sons, 1988, vol. 12

- Overview of variable-angle spectroscopic ellipsometry (VASE): I. Basic theory and typical applications. **J. A. WOOLLAM et al.** Optical Metrology, Proc. SPIE. SPIE - The International Society of Optical Engineering, 1999, vol. CR 72, 3-28